Europäisches Patentamt

European Patent Office

Office européen des brevets

(11) Publication number: **0 224 752**
**A2**

## EUROPEAN PATENT APPLICATION

(21) Application number: **86115448.2**

(22) Date of filing: **07.11.86**

(51) Int. Cl.4: **G05B 19/04 , G05B 19/405**

(30) Priority: **07.11.85 JP 171012/85**

(43) Date of publication of application:
**10.06.87 Bulletin 87/24**

(84) Designated Contracting States:
**DE GB NL SE**

(71) Applicant: **MITSUBISHI DENKI KABUSHIKI KAISHA**
**2-3, Marunouchi 2-chome Chiyoda-ku**
**Tokyo 100(JP)**

(72) Inventor: **Takahashi, Noboru Mitsubishi Denki K.K.**
**Nagoya Works No. 1-14, Yasaminami 5-chome**
**Higashi-ku Nagoya-shi Aichi(JP)**

(74) Representative: **Lehn, Werner, Dipl.-Ing. et al Hoffmann, Eitle & Partner Patentanwälte Arabellastrasse 4 (Sternhaus)**
**D-8000 München 81(DE)**

(54) **Peripheral device of a programmable controller.**

(57) A peripheral device (1) for a programmable controller which performs preliminary processing on externally supplied inputs to determine if there is an error. If there is an error, a voice message is broadcast to the operator.

*FIG. 3*

## PERIPHERAL DEVICE OF A PROGRAMMABLE CONTROLLER

Field of the Invention

This invention relates to a peripheral device for being connected to a programmable controller.

Background of the Invention

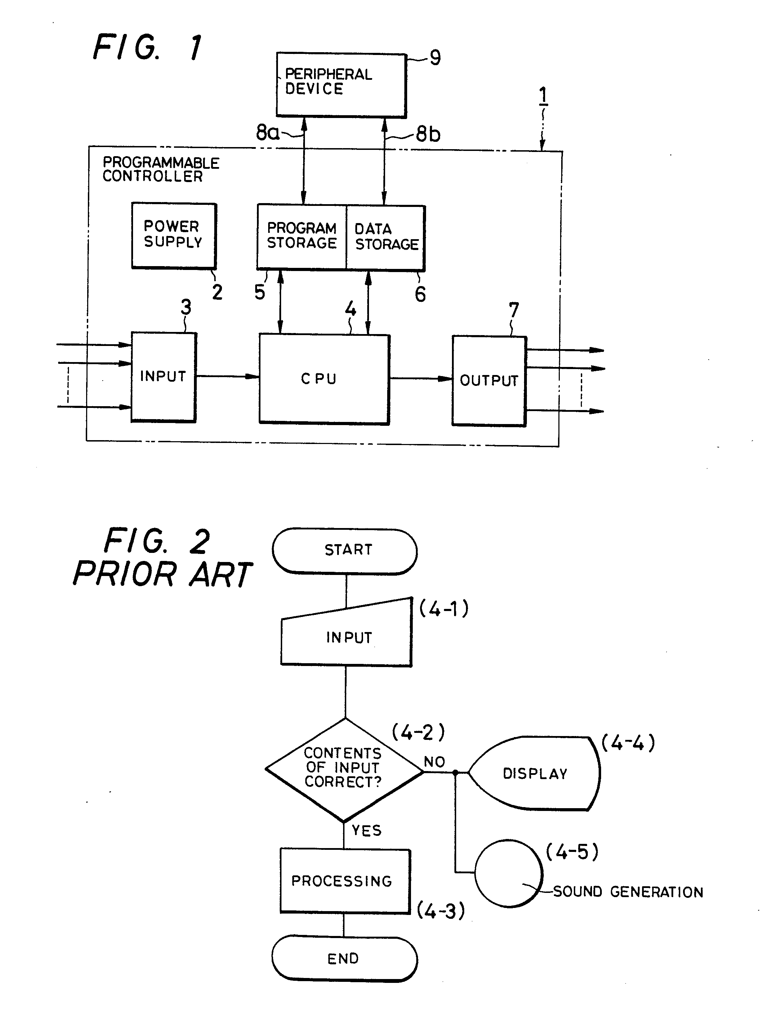

Fig. 1 is a block diagram showing the basic construction of a programmable controller.

In Fig. 1, there is shown a programmable controller 1 including a power supply means 2 for converting an outside power supply into a d.c. supply required inside the controller 1. An input means 3 converts an input signal applied by an input device such as a limit switch into what is at a signal level usable inside the controller 1. The input means 3, under instructions from a processing means 4 (hereinafter called the "CPU 4"), selects the input signal required to be sent to the CPU 4. The CPU 4 receives the input signal required from the input means 3, makes prescribed operations according to the contents of a program and supplies the result to an output means 7. A program storage means 5 stores the program as a set of instructions for control of the CPU 4. A data storage means 6 stores the results of operations. The output means 7 holds the results of operations conducted by the CPU 4 and amplifies the signal level to the extent corresponding to an output device such as a solenoid valve. The programmable controller 1 is connected to a peripheral device 9, such as a programming device, through predetermined interfaces 8a and 8b.

In the above peripheral device 9, the procedure illustrated in Fig. 2 has conventionally been followed to make known an error in the contents of an input and inform the operator of the error by means of a buzzer when, for example, the programming device is used to input a program. That is, as shown by a flowchart of Fig. 2, the operator is supposed to input a predetermined program (4-1). The program determines whether or not the contents of the input contain an error (4-2). The peripheral device 9 then processes the program (4-3), such as delivering it for execution by the CPU 4, provided that no error is contained therein.

If an error exists, on the other hand, a display unit and a buzzer are used to display (4-4) the error and alert (4-5) the operator to the error.

In the conventional peripheral device of a programmable controller thus arranged, i.e., screen display and simple sound only are employed for informing purposes, the problem is that it may be hard to make clear an error in the contents of an input and to give instructions concerning the next operation to the satisfaction of the operator.

SUMMARY OF THE INVENTION

The present invention is intended to solve the above problem. It is therefore an object of the invention to provide such a peripheral device for being connected to a programmable controller as is capable of making the operator clearly understand an error in the contents of an input when applied, what is the next operation and the like.

The peripheral device thus connected to a programmable controller according to the present invention is capable of informing an error in the contents of the input applied and providing instructions concerning the next operation with a display means adapted to make a display, a sound generating means and an audio (verbal) means.

BRIEF DESCRIPTION OF THE DRAWINGS

Fig. 1 is a block diagram showing the basic construction of a programmable controller.

Fig. 2 is a flowchart illustrating a process in the case of a conventional peripheral device.

Fig. 3 is a block diagram of a peripheral device for being connected to a programmable controller according to the present invention.

Fig. 4 is a flowchart illustrating a process similar to what is shown in Fig. 2 for informing an error in the contents of an input to the peripheral device.

DETAILED DESCRIPTION OF THE PREFERRED EMBODIMENTS

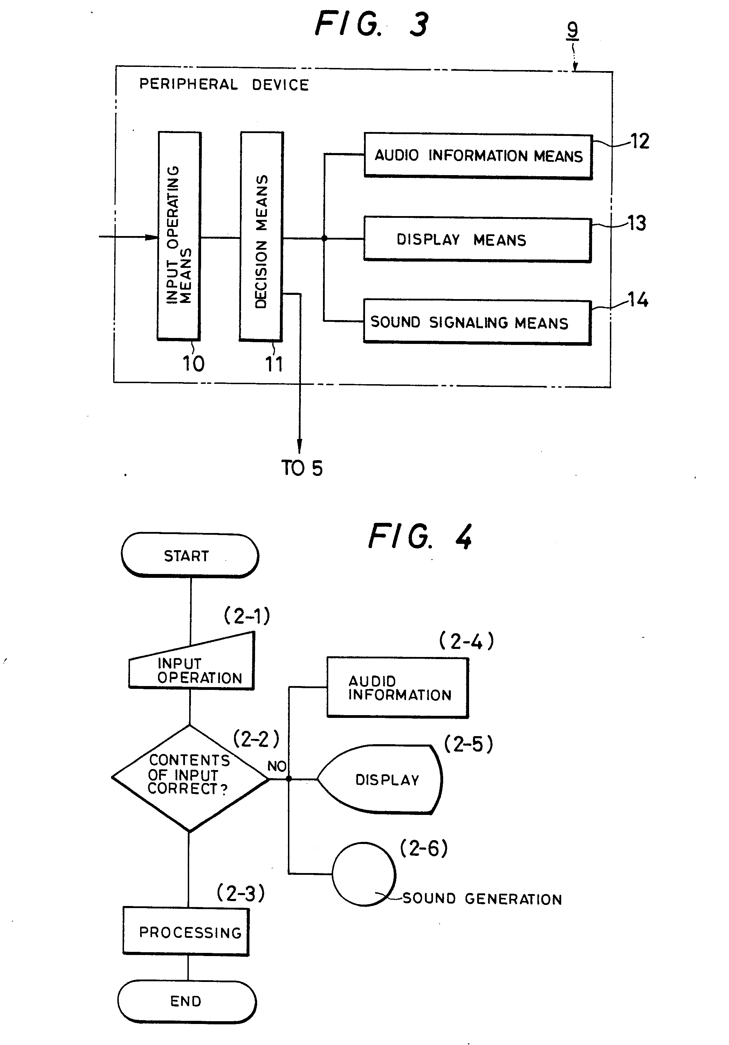

Fig. 3 is a block diagram of a peripheral device for being connected to a programmable controller according to the present invention.

In Fig. 3, the peripheral device 9 comprises an input operating means 10 receiving signals, for instance, from the operator. A decision means 11 determines whether the contents of the output of the input operating means is correct or not. If the contents are correct, they are then delivered to the processing storage means 5. An audio information means 12 is used for informing, with an understandable voice message, the contents of the error when the contents of the input are judged by the decision means 11 to be erroneous. A display means 13 displays the error in the contents of the input on a display unit such as a CRT. A sound signaling means 14 alerts the operator to the error in the contents of the input with a buzzer or the like.

Referring to the flowchart of Fig. 2, the operation of the peripheral device 9 thus arranged of the above programmable controller will subsequently be described.

When the operator operates the input operating means 10 such as a keyboard to first input a predetermined program (2-1), the decision means 11 determines whether or not the contents of an input are correct (2-2). If the contents thereof are free from an error, the decision means 11 continues to follow a predetermined process (2-3), whereby the program is written to the program storage means 5 in the programmable controller 1 of Fig. 1.

On the other hand, if there is an error in the contents of the input, the audio information means 12, the display means 13 and the sound generating means 14 are operated to inform the operator of the error with voice, screen display and alarm sound.

Although a description has been given of providing information concerning the error in the contents of the input in the above embodiment, the peripheral device may also be so arranged as to give instructions concerning the next operation.

Although the described embodiment contains the audio information means 12 in addition to the display generating means 13 and sound generating means 13, which are conventionally provided, those display and sound generating means 13 and 14 can be dispensed with. That is, only the audio information means 12 may be contained as error informing means in the programmable controller of the invention.

As the audio information means 12, moreover, there may be employed an IC so arranged as to articulate by voice an error in an input or the contents of the next operation.

As set forth above, the present invention has an excellent effect in that the operator and anyone in the vicinity can readily understand an error in the contents of an input to the peripheral device, instructions concerning the next operation and the like because the audio information means is employed to voice not only the error but also the instructions.

## Claims

1. A programmable controller system, comprising a programmable controller (1) and a peripheral device (9) receiving an externally provided input for input to said programmable controller (1),

characterized in that said peripheral device (9) includes

means (11) for detecting an error in said input, and audio information means (12), responsive to said detected error, for informing with an unterstandable voice message of said detected error.

2. A programmable controller system as claimed in claim 1,

characterized in that said audio information means (12) provides audio instructions as to contents of a next input to said peripheral device (9).

3. A programmable controller system as claimed in claim 2,

characterized by further comprising a video display (13) and a sound alarm (14) operating in response to said detected error.

4. A programmable controller system as claimed in claim 2,

characterized in that said input is a program provided by an operator and wherein said next input is a next operation to be inputted by said operator to said peripheral device (9).

Neu eingereicht / Newly filed
Nouvellement déposé

0 224 752

# FIG. 1

PERIPHERAL DEVICE — 9

8a — 8b

1

PROGRAMMABLE CONTROLLER

POWER SUPPLY — 2

PROGRAM STORAGE — 5

DATA STORAGE — 6

INPUT — 3

CPU — 4

OUTPUT — 7

# FIG. 2
## PRIOR ART

START

INPUT (4-1)

CONTENTS OF INPUT CORRECT? (4-2)

NO → DISPLAY (4-4)

SOUND GENERATION (4-5)

YES

PROCESSING (4-3)

END

0 224 752

Neu eingereicht / Newly filed
Nouvellement déposé

# FIG. 3

9

**PERIPHERAL DEVICE**

INPUT OPERATING MEANS — 10

DECISION MEANS — 11

AUDIO INFORMATION MEANS — 12

DISPLAY MEANS — 13

SOUND SIGNALING MEANS — 14

TO 5

# FIG. 4

START

(2-1) INPUT OPERATION

(2-2) CONTENTS OF INPUT CORRECT?

NO

(2-4) AUDIO INFORMATION

(2-5) DISPLAY

(2-6) SOUND GENERATION

(2-3) PROCESSING

END